# EUROPEAN PATENT APPLICATION

(11) **EP 4 491 864 A1**
(43) Date of publication of application: **15.01.2025**
(21) Application number: 23315281.8
(22) Date of filing: 13.07.2023
(51) Int. Cl.: F02M 35/10, F16K 15/02, F16K 49/00, F01M 13/00

(54) **CHECK VALVE FOR A CRANK CASE VENTILATION SYSTEM**

(71) Applicant: MANN+HUMMEL GmbH, 71636 Ludwigsburg (DE)
(72) Inventor: LEYE, Fallou, 44230 Saint Sebastien Sur Loire (FR); SCHLEIDEN, Thomas, 71720 Oberstenfeld (DE)
(74) Representative: Mann + Hummel Intellectual Property

(57) **Abstract**

The invention refers to a non-return check valve for crank case ventilation. A support body is clipped into a housing in a fixed rotational position. Thereto, latching hooks of the support body may engage into axially extending grooves of the housing. A plunger is urged to close a passage in the housing by a spring, which is axially supported on the support body..

## Description

### Technical field

The present invention refers to a check valve, the check valve comprising
- a housing, having a valve seat;
- a plunger, at least partially received inside the housing and movable along a longitudinal axis inside the housing;
- a spring, biasing the plunger against the valve seat of the housing; and
- a support body, against which the spring rests.

### Background

Check valves of this type are generally known.

Crank case ventilation systems are also generally known. E.g. DE 10 2011 118 790 B4 discloses a crank case ventilation system for an internal combustion engine with a breather line connecting the crank case of the internal combustion engine with an intake tract of the internal combustion engine. The use of a check valve is not described in DE 10 2011 118 790 B4.

Crank case ventilation systems are used to feed gases from the crank case into an air intake system of a combustion engine.

From US 2005/0055817 A1 a float operated fuel vapor vent valve is known, which has a body structure with an annular mounting flange formed of material weldable to a fuel tank and the flange is spin welded to the tank. A float is biased upwardly by a spring with one end registered against the lower end of the float and the opposite end of the spring registered against an end cap or closure member secured in the lower end of a float chamber. When the fuel level in the tank rises to a certain level, upward movement of the float causes a valve member to close against a valve seat. The float has at least one and preferably a plurality of oppositely disposed engagement surfaces in the form of longitudinal groves formed therein; and the wall of the float chamber has correspondingly configured engagement surfaces in the form of projections provided thereon which slidably engage the grooves respectively. Upon spin welding of the body flange onto the fuel tank the sliding engagement of the projections with the grooves prevents relative rotation of the float with respect to the body.

It is an object of the invention to improve assembly of crank case ventilation systems and in particular check valves thereof.

This is achieved by a check valve according to claim 1, a valve assembly according to claim 12 and a manufacturing method according to claim 15. Advantageous embodiments are given in the subclaims and the description.

### Disclosure of the invention

In accordance with the invention, a check valve for a crank case ventilation system is provided. The check valve comprises
- a housing, having a valve seat;
- a plunger, at least partially received inside the housing and movable along a longitudinal axis;
- a spring, biasing the plunger against the valve seat of the housing; and
- a support body, against which the spring rests.

In crank case ventilation systems, check valves are used to feed gases from the crank case into an air intake system of a combustion engine, when the pressure in the crank case exceeds the opening pressure of the check valve. Furthermore, using check valves, which are closed by default, an automatic detection of open lines, e.g. due to loose pipes or hoses, in such crank case ventilation systems is possible.

The plunger is movable inside the housing in order to close or open the check valve. By default, the fluid passage is closed by plunger being pressed against the valve seat because of the spring force. In other words, the spring biases the plunger into a closed position. Motion of the plunger away from the valve seat enables a fluid flow in a direction of allowed fluid flow. Fluid flow in the reverse direction is prohibited by the plunger sealingly abutting the valve seat. The check valve may be referred to as a nonreturn check valve.

The support body serves as a support for the spring. Furthermore, the support body may contribute to guide the plunger in radial direction during its axial (longitudinal) motion. By amending the design of the support body, flow characteristics of the check valve can easily be adjusted without the need of design amendments to the other components of the check valve.

According to the invention, the support body is snap fitted to the housing in a fixed angular position with respect to the longitudinal axis. The snap fit of the support body and the housing significantly simplifies assembly of the check valve. The spring and the plunger can be arranged relative to one another and either be inserted into the housing or they are positioned at the support body. To finish assembly of the check valve, the support body is pressed into the housing, whereby the snap connection is automatically established.

The snap connection between the support body and the housing is established such that the support body and the housing are non-rotatable against each other with respect to the longitudinal axis. In other words, the support body and the housing cannot rotate around the longitudinal axis relative to one another. This facilitates mounting the check valve to another component of the crank case ventilation system, e.g. a heater pipe, in particular by rotational welding (spin welding). Rotational welding is efficient and fast to execute and ensures a fluid tight connection. During rotational welding, the support body rotates together with the housing. Damage to the components of the check valve is thereby prevented. The support body, which rotates around the longitudinal axis with the housing during rotational welding, protects in particular the spring and the plunger. In other words, the support body decouples the spring and the plunger from the relative movement to the other component (e.g. heater pipe) during welding. Since no anti-rotation measures between the housing and the plunger are required, no additional friction or higher freezing risk results later valve operation.

Preferably, the snap fitted support body is held at the housing in a completely fixed position. I.e. the support body cannot move in any direction, neither by translation nor by rotational movement.

Directional references such as radial, axial or longitudinal generally refer to the longitudinal axis, if not stated otherwise.

Preferably, the support body has latching hooks, which protrude into the housing and engage into grooves of the housing. The latching hooks can also be referred to as tongues, which are provided with a hook protrusion. The grooves are generally formed as recesses in an interior wall of the housing. By engagement of the latching hooks into the recesses, a fixed rotational position is ensured. The latching hooks and the grooves generally extend in axial (longitudinal) direction. Typically, two, three or four grooves and latching hooks are provided, respectively. Equal spacing of the grooves and latching hooks around the longitudinal axis is preferred.

Particularly preferably, the grooves extend beyond the latching hooks in longitudinal direction towards the valve seat. This means that the grooves are longer in axial direction than needed for accommodation of the latching hooks. The free sections of the grooves increase a cross section for fluid flow when the valve is open. In particular, by appropriately choosing the dimensions (length and/or width) of the grooves a flow resistance of the check valve can be adapted as required. A particularly low flow resistance can be obtained.

The grooves may each have an indentation in radial direction. A hook protrusion of the latching hooks engages into the indentations. This design contributes to keep the latching hooks close to the interior wall of the housing, in order not to hinder fluid flow or motion of the plunger.

The plunger may comprise a shaft and a seal head. The seal head is adapted to cover a valve opening at the valve seat of the housing. This design requires little material and allows for improved guidance of the valve components relative to each other. The spring may be arranged around the shaft. Preferably, a gasket is overmolded to the seal head. The gasket ensures tight closure of the valve. Overmolding is an efficient manufacturing technique and avoids the gasket from being lost or forgotten to include during assembly.

Advantageously, the support body has a guidance hole, through which the shaft of the plunger extends. This further improves alignment of the plunger in the housing.

In one embodiment, the seal head may have radially outward protruding ribs for radial guidance of the seal head against the housing during axial motion of the plunger.

In a preferred embodiment, the housing has radially inward protruding ribs for radial guidance of the seal head during axial motion of the plunger. This design facilitates manufacturing and mounting of the plunger. An outer radius of the seal head may correspond to a distance of the ribs from the longitudinal axis. The ribs of the housing protrude from an interior wall thereof. The ribs may extend between the latching hooks of the support body.

The support body may have at least one stopper for the plunger, which protrudes into the housing. Upon opening of the check valve, the stoppers delimit axial motion of the plunger. In particular, the stoppers may be arranged for abutment of the seal head of the plunger.

The stopper may be formed separately from the latching hooks of the support body. In particular, the stopper protrudes further towards the valve seat than the latching hooks.

Preferably, the stopper protrudes further radially inward than the ribs for radial guidance of the seal head. This ensures that the seal head hits the stoppers at the predetermined axial (longitudinal) position. The ribs may engage between the stoppers and the latching hooks.

The housing may have a rotational welding protrusion. The rotational welding protrusion is designed to deform during rotational welding of the housing to another component of the crank case ventilation system, e.g. a heater pipe. The rotational welding protrusion may be formed as an axially protruding collar. Preferably, the rotational welding protrusion and the support body are arranged at the same axial end of the housing. This is favorable with respect to operational conditions of the check valve, in particular when a heater pipe is welded to the housing.

The invention also refers to a valve assembly comprising a check valve as described above and a pipe piece, wherein the housing of the check valve and the pipe piece are permanently bonded to one another. The pipe piece as part of the crank case ventilation systems facilitates integration of the check valve. Dismounting of the permanent bond requires destruction of the valve assembly.

Preferably, the housing and the pipe piece are bonded by rotational welding. Rotational welding is efficient and fast to execute and ensures a fluid tight connection.

A heating element may be attached to the pipe piece. In this embodiment, the pipe piece is a heater pipe. Use of the heating element to heat gas inside the valve assembly may avoid the check valve from freezing. In particular, it may be avoided that the seal head or gasket freezes to the valve seat. Preferably, the pipe piece has a socket for electric power supply to the heating element. This facilitates operation of the heater element.

Finally, the invention refers to a method for manufacturing a valve assembly as described above. The method comprises:
- providing a check valve as described above and a pipe piece;
- rotational welding of the housing of the check valve and the pipe piece.

Providing the check valve may comprise:
- providing a housing, a plunger, a spring, and a support body;
- arranging the plunger and the spring inside the housing or arranging the plunger and the spring at the support body;
- snap-fitting the support body into the housing.

In particular, the spring may be arranged around a shaft of the plunger. This method allows for efficient manufacturing of the valve assembly with a fluid tight connection of the housing to the pipe piece.

### Brief description of drawings

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
- Fig. 1: shows a valve assembly according to the invention comprising a check valve according to the invention and a heater pipe, in a schematic exploded view;
- Fig. 2: shows a schematic longitudinal section of the valve assemble of Figure 1 in the assembled state;
- Fig. 3: shows a schematic cross section through the check valve along line A-A of Figure 2;
- Fig..4: a schematic flowchart of a method for manufacturing the valve assembly of Figure 2.

### Detailed description

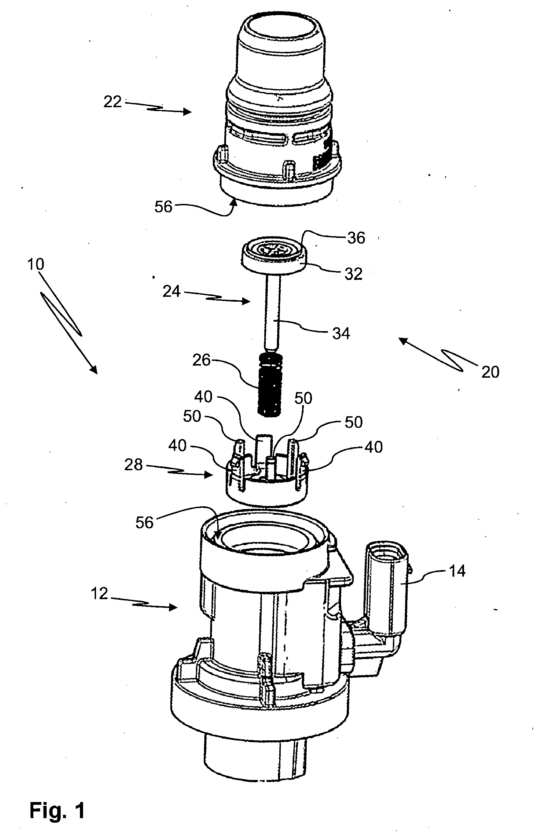

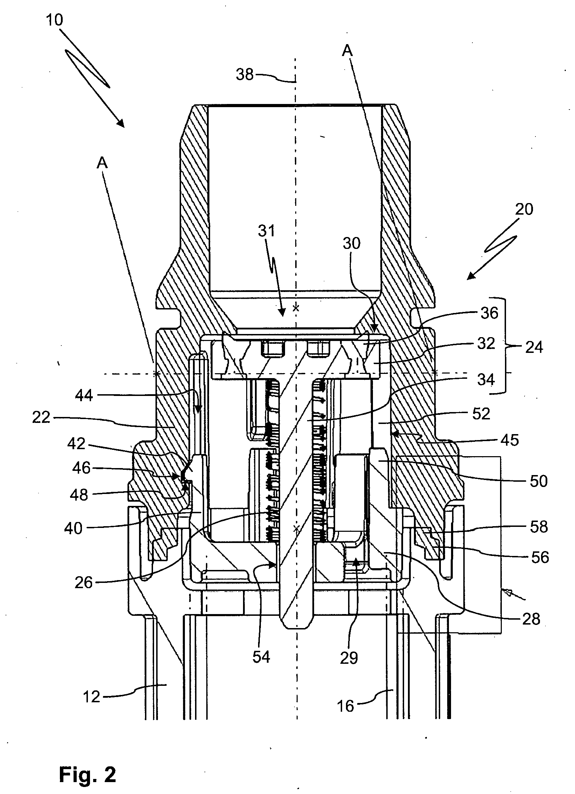

**Figure 1** shows a valve assembly **10** in an exploded view. In **Figur 2****,** a longitudinal section through the mounted valve assembly is shown.

The valve assembly 10 comprises a pipe piece **12**, which is a heater pipe in the present embodiment. The pipe piece 12 has a socket **14** (see Figure 1) for supplying electric power to a heating element **16** (see Figure 2), which is located inside heater pipe 12.

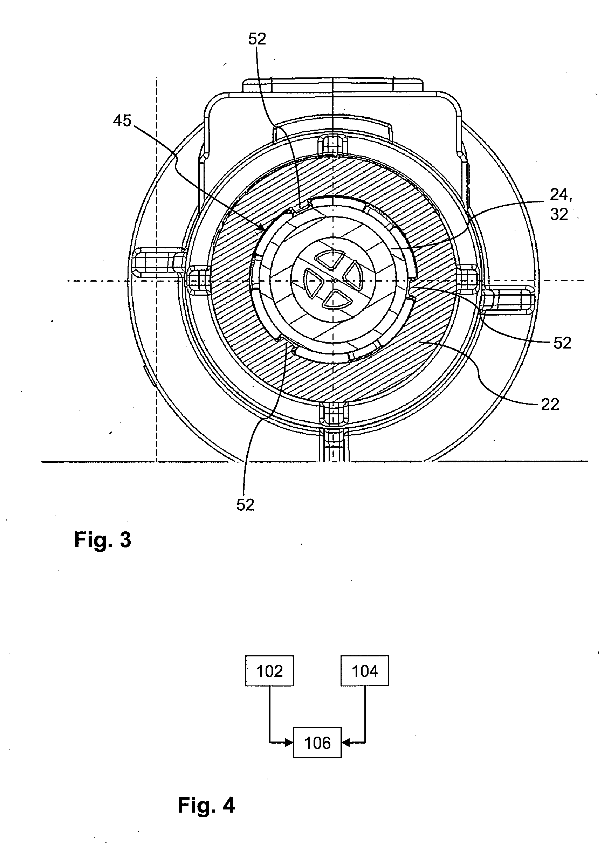

For manufacturing the valve assembly 10, in the pipe piece is provided in a step **102**, cf. **Figure 4****.**

The valve assembly 10 further comprises a check valve **20.** The check valve conprises a housing **22,** a plunger **24,** a spring **26** and a support body **28.** The suppport body 28 typically has flow openings **29,** cf. Figure 2.

A valve seat **30** is formed inside the housing 22. The valve seat 30 surrounds a valve opening **31.**

The plunger 24 is partially accomodated inside the housing 22. In the closed position, the plunger 24 covers the valve opening 31 by abutment against the valve seat 30.

In the depicted embodiment, the plunger 24 has a seal head **32** and a shaft **34.** A gasket **36,** here a axially sealing gasket, is attached to the seal head 32. In the closed position (cf. Figure 2) of the check valve 20, the seal head 32 with gasket 34 sealingly abuts the valve seat 30.

The support body 28 is held at the housing 22 by a snap fit. The spring 26 is compressed between the seal head 32 and the support body 28. The spring 26 presses the plunger 24 against the valve seat 30. The plunger 24 can move along a longitudional axis **38** in order to open the check valve 20.

The snap fit secures the support body 28 to the housing 22 in a fixed angular position with respect to the longiutidinal axis 38.

The support body 28 has axially extending latching hooks **40** (see Figures 1 and 2). Here, three latching hooks 40 are provided. A hook protrusion **42,** which points radially outwardly, is formed at the free end of each latching hook 40.

The housing has axially extending grooves **44**, see in particular Figure 2, which are depressions or recesses in an interior wall **45** of the housing 22. Here, three grooves 44 are provided. The grooves 44 each extend from an end of the housing 22, at which end the support body 28 is to be received, towards the valve seat 30. The grooves 44 are each provided with an indentation **46** which forms a shoulder **48.**

In the assembled state, each latching hook 40 is received in one of the grooves 44. In particular, the hook protrusions 42 engage into the indentations 46 and behind the shoulders 48. Thereby, the support body is secured to the housing in axial direction (in paricular by engagement of the hook protrusions 42 behind the shoulder 48) and in rotational direction (by engagement of the latching hooks 40 into the grooves 44, which are just wide enough in circumferential direction to receive the latching hooks 40).

To provide the check valve 20 in a step **104** (cf. Figure 4), the spring 26 is arranged around the shaft 34 of the plunger 24. In one variant, the plunger 24 with the spring 26 are inserted into the housing 22. In another variant the shaft 34 of the plunger 24 is introduced into a guidance hole **54** of the support body 28. To finish assembly of the check valve 20 in both variants, the support body 28 is pressed into the housing 22 so that the latching hooks snap into the grooves 44.

The grooves 44 extend towards the valve seat 30 significantly farter as required to accommodate the latching hooks 40. In particular, the grooves 44 may extend at least 1 cm, preferably at least 1.5 cm, beyond the latching hooks 40 in axial direction. The grooves 44 may extend all the way to the valve seat 30 or they may terminate at an axial distance, of e.g. between 3 mm to 1 cm, from the valve seat 30. The open sections of the grooves 44 allow for low resistance gas flow when the check valve 20 is in the open state (plunger 24 liftet from valve seat 30 against the action of spring 26, not depicted).

The support body comprises stoppers **50,** which delimit the opening movement of the plunger 24. The stoppers 50 extend in axial direction at least as far as the latching hooks 40, in particular at least 1 mm farther. When the plunger 24 is lifted off from the valve seat 30, the seal head 32 will eventually hit the stoppers 50. Thereby, the completely open position of the plunger 24 or seal head 32, respectively, is defined.

The housing 22 has ribs **52,** which protrude radially inwardly from the interor wall 45, see Figure 2 and **Figure 3****.** Here, three ribs 52 are provided.

The ribs 52 extend from the valve seat 30 towards the support body in axial direction, cf. Figure 2. In radial direction, the stoppers 50 protrude furhter towars the longitudinal axis 38 than the ribs 52, in paricular by at least 1 mm. The ribs 52 engage between the latching hooks 40 and the stoppers 50 of the support body 28. The ribs 52 provide radial guidance to the plunger 24 by abutment against the outer perimeter of the seal head 32.

The support body 28 has a guidance hole 54, which is concentric to the longitudinal axis 38. The shaft 34 of the plunger 24 is received in the guidance hole 54. In particular, the shaft 34 may extend completely through the guidance hole 54 in axial direction. The inner diameter of the guidance hole 54 is slightly wider than the outer diameter of the shaft 34, for instance by at least 0.1 mm and/or at most 0.5 mm. The guidance hole 54 provides radial guidance to the plunger 24 at the shaft 34. With the guidance hole 54 and the ribs 52, a radial position of the plunger 24 is defined in two axially spaced apart locations.

The housing 22 of the check valve 20 is fixed to the pipe piece 12 by rotational welding, cf. step **106** in Figure 4. The housing 22 has a rotational welding protrusion **56,** here designed as an annular collar, cf. Figures 1 and 2. The rotational welding protrusion 56 is provided at the same axial end of the housing 22 as is the support body 28. The rotational welding protrusion 56 surrounds the support body 28 on the radially outside. The rotational welding protrusion 56 may or may not protrude (cf. Figure 2) beyond the support body 28 in axial direction. In the depicted embodiment, the support body 28 and the shaft 34 of the plunger 24 are partially received inside the pipe piece 12.

During rotational welding, the hpusing 22 with the rotational welding protrusion 56 is rotated around the longitudinal axis 38 relative to the pipe piece 12 and pressed against a rotational welding flange **58** of the pipe piece 12, thus generating heat. The support body 28 rotates together with the housing 22 and protects the plunger 24 and the spring 26. The rotational welding flange 58 and the rotational welding protrusion 56 are compressed in axial direction and establish a permanent, gas thight bond upon cooling, after the rotation has been stopped.

In summary, the invention relates to a non-return check valve for crank case ventilation. A support body is clipped into a housing in a fixed rotational position. Thereto, latching hooks of the support body may engage into axially extending grooves of the housing. A plunger is urged to close a passage in the housing by a spring, which is axially supported on the support body.

### List of Reference Signs

Valve assembly **10**
Pipe piece **12**
Socket **14**
Heating element **16**
Check valve **20**
Housing **22**
Plunger **24**
Spring **26**
Support body **28**
Flow openings **29**
Valve seat **30**
Valve opening **31**
Seal head **32**
Shaft **34**
Gasket **36**
Longitudinal axis **38**
Latching hooks **40**
Hook protrusion **42**
Groove **44**
Interior wall **45**
Indentation **46**
Shoulder **48**
Stopper **50**
Ribs **52**
Guidance hole **54**
Rotational welding protrusion **56**
Rotational welding flange **58**
Providing **102** of a pipe piece
Providing **104** of a check valve
Rotational welding **106** of the pipe piece and the check valve

## Claims

1. Check valve (20) for a crank case ventilation system, the check valve (20) comprising
- a housing (22), having a valve seat (30);
- a plunger (24), at least partially received inside the housing (22) and movable along a longitudinal axis (38);
- a spring (26), biasing the plunger (24) against the valve seat (30) of the housing (22); and
- a support body (28), against which the spring (26) rests;
wherein the support body (28) is snap fitted to the housing (22) in a fixed angular position with respect to the longitudinal axis (38).

2. Check valve (20) according to claim 1, wherein the support body (28) has latching hooks (40), which protrude into the housing (22) and engage into grooves (44) of the housing (22).

3. Check valve (20) according to claim 2, wherein the grooves (44) extend beyond the latching hooks (40) in longitudinal direction towards the valve seat (30).

4. Check valve (20) according to claim 2 or 3, wherein the grooves (44) each have an indentation (46) in radial direction, into which a hook protrusion (42) of the latching hooks (40) engages.

5. Check valve (20) according to one of the preceding claims, wherein the plunger (24) comprises a shaft (34) and a seal head (32), preferably wherein a gasket (36) is overmolded to the seal head (32).

6. Check valve (20) according to claim 5, wherein the support body (28) has a guidance hole (54), through which the shaft (34) of the plunger (24) extends.

7. Check valve (20) according to claim 5 or 6, wherein the seal head (32) has radially outward protruding ribs for radial guidance of the seal head (32) against the housing (22) during axial motion of the plunger (24).

8. Check valve (20) according to claim 5 or 6, wherein the housing (22) has radially inward protruding ribs (52) for radial guidance of the seal head (21) during axial motion of the plunger (24).

9. Check valve (20) according to one of the preceding claims, wherein the support body (28) has at least one stopper (50) for the plunger (24), which protrudes into the housing (22).

10. Check valve (20) according to claim 8 and claim 9, wherein the stopper (50) protrudes further radially inward than the ribs (52).

11. Check valve (20) according to one of the preceding claims, wherein the housing (22) has a rotational welding protrusion (56), preferably wherein the rotational welding protrusion (56) and the support body (28) are arranged at the same axial end of the housing (22).

12. Valve assembly (10) comprising a check valve (20) according to one of the preceding claims and a pipe piece (12), wherein the housing (22) of the check valve (20) and the pipe piece (12) are permanently bonded to one another.

13. Valve assembly (10) according to claim 12, wherein the housing (22) and the pipe piece (12) are bonded by rotational welding.

14. Valve assembly (10) according to claim 12 or 13, wherein a heating element (16) is attached to the pipe piece (12), preferably wherein the pipe piece (12) has a socket (14) for electric power supply to the heating element (16).

15. Method for manufacturing a valve assembly (10) according to one of claims 12 to 14, the method comprising
- providing a check valve (20) according to one of claims 1 to 11 and a pipe piece (12);
- rotational welding of the housing (22) of the check valve (20) and the pipe piece (12).
